(19) Europäisches Patentamt
European Patent Office
Office européen des brevets

(11) **EP 3 552 008 B1**

(12) **FASCICULE DE BREVET EUROPEEN**

(45) Date de publication et mention de la délivrance du brevet:
**11.11.2020 Bulletin 2020/46**

(21) Numéro de dépôt: **17821687.5**

(22) Date de dépôt: **06.12.2017**

(51) Int Cl.:
**G01N 29/04** *(2006.01)*     **G01N 29/11** *(2006.01)*
**G01N 29/44** *(2006.01)*     **G01N 29/46** *(2006.01)*

(86) Numéro de dépôt international:
**PCT/FR2017/053420**

(87) Numéro de publication internationale:
**WO 2018/104666 (14.06.2018 Gazette 2018/24)**

(54) **PROCÉDÉ ET DISPOSITIF DE CONTRÔLE D'UN COLLAGE ENTRE DEUX SUBSTRATS**

VERFAHREN UND VORRICHTUNG ZUR PRÜFUNG EINER VERBINDUNG ZWISCHEN ZWEI SUBSTRATEN

METHOD AND DEVICE FOR CHECKING A BOND BETWEEN TWO SUBSTRATES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2016 FR 1662258**

(43) Date de publication de la demande:
**16.10.2019 Bulletin 2019/42**

(73) Titulaire: **Commissariat à l'énergie atomique et aux énergies alternatives
75015 Paris (FR)**

(72) Inventeurs:
• **FOURNEL, Frank**
**38190 Villard-Bonnot (FR)**
• **DEKIOUS, Ali**
**34170 Castelnau Le Lez (FR)**
• **DELOFFRE, Emilie**
**38330 Saint-Ismier (FR)**
• **DESPAUX, Gilles**
**34680 Saint-Georges D'orques (FR)**
• **LARREY, Vincent**
**38140 La Murette (FR)**
• **LE CLEZIO, Emmanuel**
**34270 Les Matelles (FR)**

(74) Mandataire: **Cabinet Beaumont
4, Place Robert Schuman
B.P. 1529
38025 Grenoble Cedex 1 (FR)**

(56) Documents cités:
• **BALTAZAR A ET AL: "Inverse ultrasonic determination of imperfect interfaces and bulk properties of a layer between two solids", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 114, no. 3, 1 septembre 2003 (2003-09-01), pages 1424-1434, XP012003659, ISSN: 0001-4966, DOI: 10.1121/1.1600723**
• **DING JUNCAI ET AL: "Reflection and transmission coefficients of the SH0mode in the adhesive structures with imperfect interface", ULTRASONICS, IPC SCIENCE AND TECHNOLOGY PRESS LTD. GUILDFORD, GB, vol. 70, 17 mai 2016 (2016-05-17), pages 248-257, XP029569558, ISSN: 0041-624X, DOI: 10.1016/J.ULTRAS.2016.05.010**
• **SINGHER L ET AL: "CONSIDERATIONS IN BOND STRENGTH EVALUATION BY ULTRASONIC GUIDED WAVES", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 96, no. 4, 1 octobre 1994 (1994-10-01), pages 2497-2505, XP000476298, ISSN: 0001-4966, DOI: 10.1121/1.410123**

## Description

La présente demande de brevet revendique la priorité de la demande de brevet français FR16/62258 qui sera considérée comme faisant partie intégrante de la présente description.

## Domaine

La présente demande concerne un procédé et un dispositif de contrôle de la qualité d'un collage entre deux substrats.

## Exposé de l'art antérieur

Il existe de nombreuses applications, notamment dans les domaines de la microélectronique et de l'optoélectronique, dans lesquelles deux substrats sont accolés via des faces principales respectives, de façon à obtenir un assemblage comportant un empilement des deux substrats. Les substrats peuvent être de même nature, c'est-à-dire en des matériaux identiques, ou de natures différentes, c'est-à-dire en des matériaux distincts.

Pour contrôler la qualité du collage entre les deux substrats, on a proposé des méthodes consistant à appliquer à l'assemblage une contrainte mécanique suffisamment forte pour provoquer un décollement des deux substrats. En mesurant l'énergie nécessaire pour réaliser la séparation, on peut alors estimer l'énergie d'adhérence entre les deux substrats. Un inconvénient majeur des méthodes de ce type est qu'elles sont destructives pour l'assemblage contrôlé. En particulier, dans le cadre d'une production industrielle, ces méthodes ne peuvent pas être utilisées pour contrôler tous les assemblages réalisés, mais seulement pour effectuer un contrôle statistique portant sur un nombre limité d'échantillons.

L'article intitulé "Ultrasonic spectroscopy of imperfect contact interfaces between a layer and two solids", de Anton I. Lavrentyev et al., l'article intitulé "On the relationship between ultrasonic and micro-structural properties of imperfect interfaces in layered solids", de A. Baltazar et al., et l'article intitulé "On the relationship between ultrasonic and micromechanical properties of contacting rough surfaces", de A. Baltazar et al., décrivent des méthodes pour caractériser, dans un assemblage comportant deux surfaces en contact, des propriétés de l'interface entre les deux surfaces, par analyse de la réponse de l'assemblage à un signal d'excitation ultrasonore. Plus particulièrement, ces méthodes sont basées sur l'analyse spectrale d'un écho du signal d'excitation ultrasonore, réfléchi sur l'interface à caractériser.

L'article intitulé "Évaluation de l'adhérence par ultrasons haute-fréquence", de M. Ouaftouh et al., décrit une méthode similaire appliquée à l'évaluation de l'adhérence entre deux substrats collés l'un à l'autre.

Les méthodes décrites dans les articles susmentionnés présentent l'avantage d'être non destructives. Toutefois, une limitation de ces méthodes est qu'elles nécessitent de pouvoir mesurer un écho du signal d'excitation, réfléchi sur l'interface à évaluer. Or, dans certains types d'assemblages, notamment lorsque les deux substrats sont en des matériaux identiques et que les rugosités de surface à l'interface entre les deux substrats sont de très petites dimensions, par exemple inférieures à 1 nm en moyenne quadratique, cet écho peut être difficile voire impossible à mesurer.

Il existe un besoin pour un procédé et un dispositif de contrôle de la qualité d'un collage entre deux substrats, ce procédé et ce dispositif palliant tout ou partie des inconvénients des procédés et dispositifs connus.

L'article intitulé "Inverse ultrasonic détermination of imperfect interfaces and bulk properties of a layer between two solids" de Baltazar A, Wang L, Xie B et Rokhlin SI (J. Acoust. Soc. Am. 2003 Sep. ; 114(3) : 1424-34), décrit un exemple de procédé de contrôle de la qualité d'un collage.

## Résumé

Ainsi, un mode de réalisation prévoit un procédé de contrôle d'un assemblage comprenant des premier et deuxième substrats ayant chacun une face avant et une face arrière, la face arrière du premier substrat étant collée à la face avant du deuxième substrat, ce procédé comportant les étapes suivantes :

    a) émettre un signal ultrasonore d'excitation en direction de l'assemblage au moyen d'un transducteur ultrasonore placé du côté de la face avant du premier substrat ;

    b) mesurer, au moyen dudit transducteur, un signal ultrasonore retour comportant au moins un écho du signal d'excitation sur la face arrière du deuxième substrat ;

    c) calculer, au moyen d'un circuit de traitement, un signal spectral représentatif de l'évolution en fréquence d'un coefficient de réflexion global de l'assemblage, défini comme étant le rapport du signal retour mesuré à l'étape b) sur le signal d'excitation ; et

    d) déduire dudit signal spectral, au moyen du circuit de traitement, une information quant à la qualité du collage entre les premier et deuxième substrats.

Selon un mode de réalisation, l'étape d) comprend les étapes suivantes :

    détecter une suite de pics successifs du signal spectral, correspondant à des résonances de l'assemblage comprenant les premier et deuxième substrats ; et

    déterminer l'écart fréquentiel moyen $\Delta f$ entre deux pics consécutifs de rangs respectivement impair et pair ou de rangs respectivement pair et impair de la suite.

Selon un mode de réalisation, l'étape d) comprend la détermination, à partir de l'écart fréquentiel moyen Δf déterminé, d'une valeur représentative de l'énergie d'adhérence entre les premier et deuxième substrats.

Selon un mode de réalisation, la suite de pics comprend au moins 4 pics.

Selon un mode de réalisation, le signal retour comporte au moins deux échos successifs du signal d'excitation sur la face arrière du deuxième substrat.

Selon un mode de réalisation, le signal retour comporte trois échos successifs du signal d'excitation sur la face arrière du deuxième substrat.

Selon un mode de réalisation, à l'étape b), le signal retour est mesuré pendant deux plages temporelles consécutives T1 et T2, la plage T1 comprenant uniquement un écho de surface du signal d'excitation renvoyé directement par la face avant du premier substrat, et la plage T2 comprenant ledit au moins un écho du signal d'excitation sur la face arrière du deuxième substrat ; et à l'étape c), le signal spectral calculé correspond au rapport d'une transposée fréquentielle du signal retour mesuré pendant la plage T1+T2 sur une transposée fréquentielle du signal retour mesuré pendant la plage T1.

Selon un mode de réalisation, le signal ultrasonore d'excitation a une fréquence comprise entre 100 MHz et 1 GHz.

Selon un mode de réalisation, la durée du signal ultrasonore d'excitation est inférieure à 1 μs.

Selon un mode de réalisation, les étapes a) à d) sont réitérées une pluralité de fois en déplaçant le transducteur ultrasonore parallèlement au plan moyen de l'assemblage entre deux itérations successives, de façon à obtenir une image ou cartographie de la qualité du collage entre les deux substrats.

Selon un mode de réalisation, à l'étape a), le signal ultrasonore d'excitation est émis sous incidence normale par rapport à la face avant du premier substrat.

Un autre mode de réalisation prévoit un dispositif de contrôle d'un assemblage comprenant des premier et deuxième substrats ayant chacun une face avant et une face arrière, la face arrière du premier substrat étant collée à la face avant du deuxième substrat, ce dispositif comportant un transducteur ultrasonore et un dispositif de traitement configurés pour mettre en oeuvre un procédé de contrôle tel que défini ci-dessus.

## Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une représentation schématique d'un exemple d'un dispositif de contrôle de la qualité d'un collage entre deux substrats ;

la figure 2 est un chronogramme illustrant le fonctionnement du dispositif de la figure 1 ;

la figure 3 est une représentation schématique d'un exemple d'un mode de réalisation d'un dispositif de contrôle de la qualité d'un collage entre deux substrats ;

la figure 4 est un chronogramme illustrant le fonctionnement du dispositif de la figure 3 ;

la figure 5 est un spectrogramme illustrant le fonctionnement du dispositif de la figure 3 ;

la figure 6 est un diagramme illustrant le fonctionnement du dispositif de la figure 3 ;

la figure 7 est un spectrogramme similaire à celui de la figure 5, illustrant plus en détail le comportement du dispositif de la figure 3 ; et

la figure 8 est un schéma bloc d'un exemple d'un circuit de traitement du dispositif de la figure 3.

## Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, les transducteurs ultrasonores des dispositifs de contrôle décrits n'ont pas été détaillés, les modes de réalisation décrits étant compatibles avec les transducteurs ultrasonores habituellement utilisés dans les systèmes de contrôle non destructif par ultrasons. Sauf précision contraire, les expressions "approximativement", "sensiblement", et "de l'ordre de" signifient à 10 % près, de préférence à 5 % près.

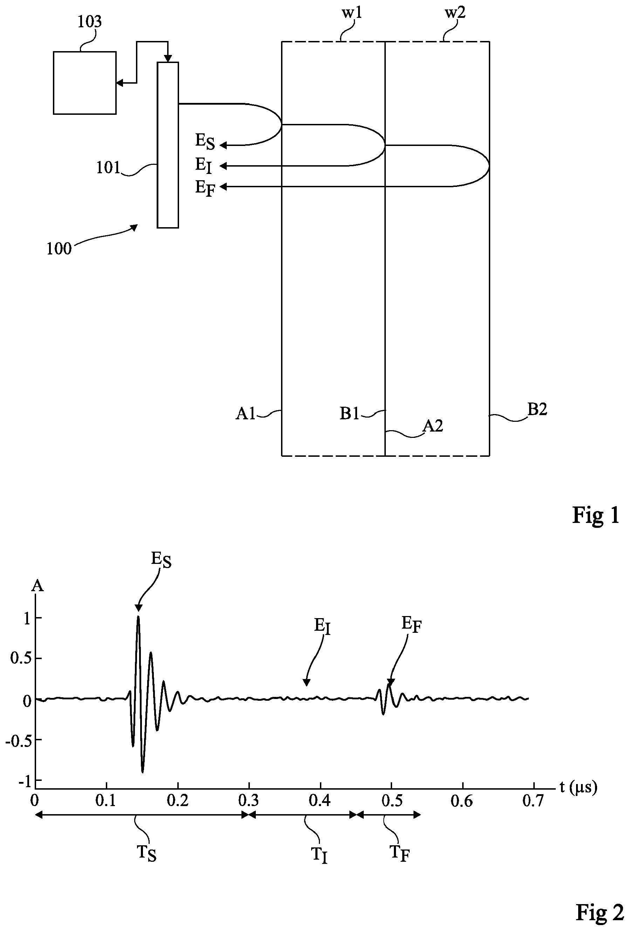

Les figures 1 et 2 illustrent plus en détail le problème évoqué ci-dessus, qui se pose lorsque l'on cherche à appliquer les méthodes de caractérisation d'interface décrites dans les articles susmentionnés, pour contrôler la qualité d'un collage entre deux substrats de même nature, dans le cas où les rugosités d'interface entre les deux substrats sont de très petites dimensions, par exemple inférieures à 1 nm en moyenne quadratique. On s'intéresse ici tout particulièrement aux assemblages dans lesquels les deux substrats sont collés par collage dit direct, c'est-à-dire sans apport d'un matériau polymère adhésif à l'interface entre les deux substrats, par exemple un collage moléculaire, un collage par thermocompression, un collage eutectique, ou un collage anodique. Le problème évoqué ci-dessus se pose en effet tout particulièrement pour ce type de collage. Un collage direct peut par exemple être effectué par application des substrats l'un contre l'autre à température et pression ambiante. Un recuit thermique peut ensuite être réalisé pour augmenter l'énergie d'adhérence ou énergie de collage. A titre de variante, le collage peut être réalisé sous vide. A titre de variante, le collage peut être réalisé à chaud et sous pression (thermocompression), avec ou sans application d'une tension électrique.

La figure 1 est une vue en coupe schématique d'un exemple d'un dispositif 100 de contrôle de la qualité d'un collage entre deux substrats W1 et W2.

Le substrat W1 présente des faces principales avant A1 et arrière B1 sensiblement planes et parallèles, et le substrat W2 présente des faces principales avant A2 et arrière B2 sensiblement planes et parallèles. La face arrière du substrat W1 est collée par collage direct à la face avant du substrat W2. Dans cet exemple, les substrats W1 et W2 sont de même nature, par exemple en silicium ou en verre. De plus, les rugosités de surface à l'interface entre les deux substrats, c'est à dire les rugosités des surfaces B1 et A2 avant collage, sont de très petites dimensions, par exemple inférieures à 1 nm en moyenne quadratique.

Le dispositif 100 comprend un transducteur ultrasonore 101, par exemple un transducteur planaire, placé en vis-à-vis de la face avant A1 du substrat W1. Le dispositif 100 comprend en outre un circuit de contrôle et de traitement 103 relié au transducteur ultrasonore 101, adapté à commander l'émission de signaux ultrasonores par le transducteur 101, et à lire et analyser des signaux ultrasonores reçus par le transducteur 101. Dans l'exemple représenté, le transducteur ultrasonore 101 est placé à distance de la face avant A1 du substrat W1, et non en contact avec la face avant du substrat W1. Un avantage est que ceci permet de ne pas risquer de détériorer le substrat W1 lors de la pose ou du retrait du transducteur. Dans ce cas, un liquide de couplage acoustique, par exemple de l'eau ou de l'alcool anhydre, est de préférence disposé entre le transducteur et l'assemblage des substrats. A titre de variante, le transducteur 101 peut être placé en contact avec la face avant A1 du substrat W1.

Un exemple de procédé de contrôle de la qualité du collage entre les substrats W1 et W2 au moyen du dispositif de contrôle 100 de la figure 1, basé sur les méthodes décrites dans les articles susmentionnés, va maintenant être décrit.

Le circuit de contrôle et de traitement 103 commande d'abord le transducteur 101 pour émettre un signal d'excitation ultrasonore en direction de la face avant A1 du substrat W1, par exemple sous incidence normale par rapport à la face avant A1 du substrat W1.

Une fois le signal d'excitation émis, le transducteur 101 est commandé par le circuit de contrôle et de traitement 103 pour mesurer un signal retour réfléchi par l'assemblage comprenant les substrats W1 et W2. Ce signal retour réfléchi comprend un ensemble de contributions, chaque contribution correspondant à un écho du signal d'excitation généré lorsque le signal d'excitation rencontre un changement de milieu.

Comme représenté par des flèches sur la figure 1, un premier écho $E_S$ du signal d'excitation, ou écho de surface, est réfléchi directement vers le transducteur par la face avant A1 du substrat W1. Une partie du signal d'excitation non réfléchie par la face avant A1 du substrat W1, pénètre dans le substrat W1, puis se réfléchit sur l'interface entre substrats W1 et W2. Un deuxième écho $E_I$ du signal d'excitation, ou écho d'interface, est ainsi renvoyé vers le transducteur par l'interface entre les substrats W1 et W2. Enfin, une partie du signal d'excitation non réfléchie par la face avant A1 du substrat W1 et non réfléchie par l'interface entre les substrats W1 et W2, pénètre dans le substrat W2 et se réfléchit sur la face arrière B2 du substrat W2. Un troisième écho $E_F$ du signal d'excitation, ou écho de fond, est ainsi renvoyé vers le transducteur par la face arrière B2 du substrat W2.

La fréquence ultrasonore d'excitation et la durée du signal d'excitation sont choisies, en tenant compte de la distance entre le transducteur et le substrat W1 et de l'épaisseur de chacun des substrats W1 et W2, de façon que les trois échos $E_S$, $E_I$ et $E_F$ puissent être séparés dans le temps. A titre d'exemple, le signal d'excitation est une impulsion ou un train d'ondes ultrasonores d'une durée de l'ordre de 0,1 μs, et la fréquence du signal d'excitation est d'environ 50 MHz. Ainsi, la durée du signal d'excitation est faible devant le temps de vol dans chacune des couches, et la séparation temporelle des trois échos.

La figure 2 est un chronogramme illustrant l'évolution, en fonction du temps t (en μs en abscisse), de l'amplitude A (en ordonnée) du signal ultrasonore retour mesuré par le transducteur 101 de la figure 1, suite à l'émission d'un signal ultrasonore d'excitation en direction de la face avant A1 du substrat W1.

Trois plages temporelles successives $T_S$, $T_I$ et $T_F$ ont été représentées sur la figure 1, correspondant respectivement aux plages de réception des échos $E_S$, $E_I$ et $E_F$ par le transducteur.

Le procédé de contrôle basé sur les méthodes décrites dans les articles d'art antérieur susmentionné comprend la sélection du seul écho d'interface $E_I$, par filtrage temporel du signal retour mesuré par le transducteur 101. Autrement dit, le circuit de contrôle et de traitement 103 réalise un filtrage temporel du signal retour mesuré de façon à conserver uniquement le signal reçu pendant la plage $T_I$. Une transposée, dans le domaine fréquentiel, du signal sélectionné, est ensuite calculée par le circuit 103. A titre d'exemple, le circuit 103 calcule une transformée de Fourier du signal mesuré par le transducteur pendant la plage $T_I$. A partir de la transposée fréquentielle du signal d'écho $E_I$, le circuit 103 génère un signal spectral représentatif de l'évolution en fréquence du coefficient de réflexion de l'interface entre les deux substrats. Une analyse de ce signal spectral est ensuite réalisée par le circuit 103 pour déterminer des informations quant aux propriétés de l'interface entre les substrats W1 et W2.

Un problème posé par cette méthode est que, comme cela apparaît sur la figure 2, dans le cas considéré ci-dessus où les substrats W1 et W2 sont de même nature, sont collés par collage direct, et présentent des rugosités de surface de très petites dimensions à l'interface entre les deux substrats, l'écho $E_I$ reçu par le transducteur dans la fenêtre $T_I$ est généralement trop faible pour pouvoir être distingué du bruit de mesure. Autrement dit, le coefficient de réflexion de l'interface est proche de zéro, ce qui empêche toute exploitation directe de ce coefficient pour évaluer la qualité du collage. Les essais réalisés par les inventeurs ont en particulier montré que l'écho $E_I$ reste pratiquement indétectable même lorsque la qualité du collage est mauvaise. A titre d'exemple illustratif, la courbe de la figure 2 correspond à un signal mesuré dans le cas d'un collage direct (ou collage moléculaire) silicium/silicium réalisé volontairement pour présenter une faible énergie d'adhérence, de l'ordre de 0,05 J.m$^{-2}$, alors qu'un collage direct silicium/silicium est généralement considéré comme satisfaisant lorsque l'énergie d'adhérence entre les deux substrats est d'au moins 0,2 J.m$^{-2}$ et de préférence d'au moins 0,4 J.m$^{-2}$.

Ainsi, les méthodes des articles d'art antérieur susmentionnés sont inadaptées pour contrôler des collages du type décrit ci-dessus.

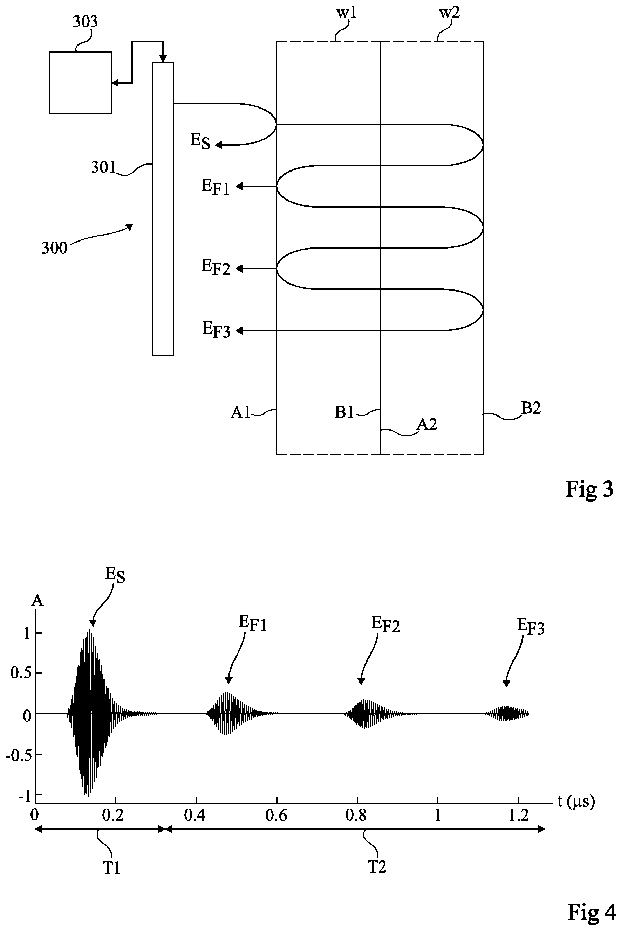

La figure 3 est une vue en coupe schématique d'un exemple d'un mode de réalisation d'un dispositif 300 de contrôle de la qualité d'un collage entre deux substrats W1 et W2.

L'assemblage comprenant les substrats W1 et W2 est identique ou similaire à ce qui a été décrit ci-dessus. Chacun des substrats W1 et W2 a par exemple une épaisseur comprise entre 100 μm et 1 mm. Dans l'exemple représenté, les substrats W1 et W2 ont sensiblement la même épaisseur. A titre de variante, les substrats W1 et W2 peuvent avoir des épaisseurs différentes. L'épaisseur du plus fin des deux substrats W1 et W2 est de préférence au moins égale au dixième de l'épaisseur de l'autre substrat.

Le dispositif 300 comprend un transducteur ultrasonore 301, par exemple identique ou similaire au transducteur 101 de la figure 1, placé en vis-à-vis de la face avant A1 du substrat W1. Le dispositif 300 comprend en outre un circuit de contrôle et de traitement 303 relié au transducteur ultrasonore 301, adapté à commander l'émission de signaux ultrasonores par le transducteur 301, et à lire et analyser des signaux ultrasonores reçus par le transducteur 301. Comme dans l'exemple de la figure 1, le transducteur 301 de la figure 3 est placé à distance de la face avant A1 du substrat W1, et non en contact avec la face avant du substrat W1. Les modes de réalisation décrits ne se limitent toutefois pas à ce cas particulier. L'ensemble comprenant le transducteur 301 et les substrats W1 et W2 peut être plongé dans un liquide de couplage acoustique, par exemple de l'eau ou de l'alcool anhydre. Selon le type de collage réalisé entre les substrats W1 et W2, les bords périphériques de l'assemblage comprenant les substrats W1 et W2 peuvent être protégés, par exemple par une isolation étanche en paraffine ou en tout autre matériau adapté, de façon à éviter une pénétration du liquide de couplage acoustique entre les deux substrats, ce qui pourrait dégrader ou modifier le collage.

Un exemple d'un mode de réalisation d'un procédé de contrôle de la qualité du collage entre les substrats W1 et W2, au moyen du dispositif de contrôle 300 de la figure 3, va maintenant être décrit.

Comme dans l'exemple précédent, le circuit de contrôle et de traitement 303 commande d'abord le transducteur 301 pour émettre un signal d'excitation ultrasonore en direction de la face avant A1 du substrat W1, par exemple sous incidence normale par rapport à la face avant A1 du substrat W1.

Une fois le signal d'excitation émis, le transducteur 301 est commandé par le circuit de contrôle et de traitement 303 pour mesurer un signal retour réfléchi par l'assemblage comprenant les substrats W1 et W2.

Comme dans l'exemple des figures 1 et 2, un premier écho $E_S$ du signal d'excitation, ou écho de surface, est directement renvoyé vers le transducteur par la face avant A1 du substrat W1. Une partie du signal d'excitation non réfléchie par la face avant A1 du substrat W1, pénètre dans le substrat W1.

Dans cet exemple, les échos éventuels renvoyés par l'interface entre les substrats W1 et W2 sont négligés.

La partie du signal d'excitation pénétrant dans le substrat W1 par sa face avant A1 traverse le substrat W1 puis le substrat W2, et se réfléchit une première fois sur la face arrière B2 du substrat W2. Un deuxième écho $E_{F1}$, ou premier écho de fond, est ainsi renvoyé vers le transducteur après réflexion sur la face arrière B2 du substrat W2.

L'écho de fond $E_{F1}$ reçu par le transducteur 301 ne comprend qu'une partie du signal issu de la première réflexion du signal d'excitation sur la face arrière B2 du substrat W2. En effet, une partie du signal réfléchi par la face arrière B2 du substrat W2 est réfléchie à nouveau par la face avant A1 du substrat W1, et n'est donc pas directement transmise au transducteur 301.

Le signal réfléchi sur la face avant A1 du substrat W1 traverse une nouvelle fois les deux substrats W1 et W2 et se réfléchit à nouveau sur la face arrière B2 du substrat W2. Un troisième écho $E_{F2}$, ou deuxième écho de fond, est ainsi renvoyé vers le transducteur par la face arrière B2 du substrat W2.

Là encore, l'écho de fond $E_{F2}$ reçu par le transducteur 301 ne comprend qu'une partie du signal issu de la deuxième réflexion du signal d'excitation sur la face arrière B2 du substrat W2. En effet, une partie du signal réfléchi par la face arrière B2 du substrat W2 se réfléchit à nouveau sur la face avant A1 du substrat W1, et n'est donc pas directement transmise au transducteur 301.

Le signal réfléchi sur la face avant A1 du substrat W1 traverse encore une fois les deux substrats W1 et W2 et se réfléchit à nouveau sur la face arrière B2 du substrat W2. Un quatrième écho $E_{F3}$, ou troisième écho de fond, est ainsi renvoyé vers le transducteur par la face arrière B2 du substrat W2, et ainsi de suite jusqu'à évanouissement complet du signal d'excitation.

La fréquence ultrasonore d'excitation et la durée du signal d'excitation sont de préférence choisies, en tenant compte de la distance entre le transducteur et le substrat W1 et de l'épaisseur de chacun des substrats W1 et W2, de façon que l'écho de surface $E_S$ d'une part, et les échos de fond $E_{F1}$, $E_{F2}$, $E_{F3}$, etc. d'autre part, puissent être séparés dans le temps. On notera que, comme cela ressortira plus clairement de la suite de la description, un avantage de la méthode proposée est que les échos de fond $E_{F1}$, $E_{F2}$, $E_{F3}$, etc. n'ont pas besoin d'être séparables temporellement les uns des autres.

A titre d'exemple, le signal d'excitation est une impulsion ou un train d'ondes ultrasonores de durée inférieure à 1 $\mu$s, et de préférence inférieure à 0,5 $\mu$s, et la fréquence du signal d'excitation est comprise entre 1 MHz et 10 GHz, et de préférence entre 100 MHz et 1 GHz.

La figure 4 est un chronogramme illustrant l'évolution, en fonction du temps t (en $\mu$s en abscisse), de l'amplitude A (en ordonnée) du signal ultrasonore retour mesuré par le transducteur 301 dans le système de la figure 3, suite à l'émission d'un signal ultrasonore d'excitation en direction de la face avant A1 du substrat W1. Dans l'exemple de la figure 4, la durée du signal d'excitation est d'environ 0,1 $\mu$s, et la fréquence du signal d'excitation est de l'ordre de 200 MHz.

Deux plages temporelles consécutives T1 et T2 ont été représentées sur la figure 4. La plage T1 comprend uniquement l'écho de surface $E_S$ renvoyé directement par la face avant A1 de l'assemblage, et la plage T2 comprend des échos ultérieurs renvoyés par l'assemblage et en particulier les trois échos de fond successifs $E_{F1}$, $E_{F2}$ et $E_{F3}$.

Dans une première variante, le procédé de contrôle mis en oeuvre par le dispositif 300 comprend la sélection, par le circuit de contrôle et de traitement 303, par filtrage temporel du signal retour mesuré par le transducteur 301, du signal retour reçu pendant la seule plage temporelle T2. Le procédé peut en outre comprendre la sélection, par le circuit de contrôle et de traitement 303, par filtrage temporel du signal retour mesuré par le transducteur 301, du signal retour reçu pendant la seule plage temporelle T1.

Une transposée, dans le domaine fréquentiel, du signal mesuré par le transducteur pendant la plage T2, est ensuite calculée par le circuit 303. A titre d'exemple, le circuit 303 calcule une transformée de Fourier du signal mesuré pendant la plage T2.

A partir de la transposée fréquentielle du signal mesuré pendant la plage T2, le circuit 303 génère un signal spectral Rg représentatif de l'évolution fréquentielle d'un coefficient de réflexion global de la structure, défini comme étant le rapport du signal retour mesuré par le transducteur, sur le signal d'excitation émis par le transducteur.

A titre d'exemple, le signal d'écho de surface $E_S$ mesuré par le transducteur pendant la phase T1 est considéré comme étant sensiblement identique au signal d'excitation initialement émis par le transducteur, et le coefficient de réflexion global $R_g$ est défini comme suit :

$$R_g = FFT(T2)/FFT(T1),$$

où FFT(T2) et FFT(T1) désignent respectivement la transposée dans le domaine fréquentiel du signal retour mesuré par le transducteur pendant la phase T2, et la transposée dans le domaine fréquentiel du signal retour mesuré par le transducteur pendant la phase T1.

Dans une deuxième variante, préférentielle, le procédé de contrôle mis en oeuvre par le dispositif 300 comprend la sélection, par le circuit de contrôle et de traitement 303, par filtrage temporel du signal retour mesuré par le transducteur 301, du signal retour reçu pendant l'ensemble des plages temporelles T1 et T2, appelé plage T1+T2. Le procédé peut en outre comprendre la sélection, par le circuit de contrôle et de traitement 303, par filtrage temporel du signal retour mesuré par le transducteur 301, du signal retour reçu pendant la seule plage temporelle T1.

Une transposée, dans le domaine fréquentiel, du signal mesuré par le transducteur pendant la plage T1+T2, est ensuite calculée par le circuit 303. A titre d'exemple, le circuit 303 calcule une transformée de Fourier du signal mesuré pendant la plage T1+T2.

A partir de la transposée fréquentielle du signal mesuré pendant la plage T1+T2, le circuit 303 génère un signal spectral Rg représentatif de l'évolution fréquentielle d'un coefficient de réflexion global de la structure, défini comme étant le rapport du signal reçu par le transducteur, sur le signal d'excitation émis par le transducteur.

A titre d'exemple, le signal d'écho de surface $E_S$ mesuré par le transducteur pendant la phase T1 est considéré comme étant sensiblement identique au signal d'excitation initialement émis par le transducteur, et le coefficient de réflexion global $R_g$ est défini comme suit :

$$R_g = FFT(T1+T2)/FFT(T1),$$

où FFT(T1+T2) et FFT(T1) désignent respectivement la transposée, dans le domaine fréquentiel, du signal retour mesuré par le transducteur pendant la phase T1+T2, et la transposée, dans le domaine fréquentiel, du signal retour mesuré par le transducteur pendant la phase T1.

On notera que dans les première et deuxième variantes décrites ci-dessus, le terme FFT(T1) de la définition du coefficient $R_g$ peut être remplacé par toute autre représentation fréquentielle du signal d'excitation émis par le transducteur, par exemple une transposée fréquentielle d'un signal de référence prélevé directement sur le transducteur lors de la phase d'émission du signal d'excitation par le transducteur. Dans ce cas, la méthode de contrôle proposée peut avantageusement être mise en oeuvre, dans sa deuxième variante, même lorsque l'écho de surface $E_S$ ne peut pas être séparé temporellement des échos de fond $E_{F1}$, $E_{F2}$, $E_{F3}$, etc.

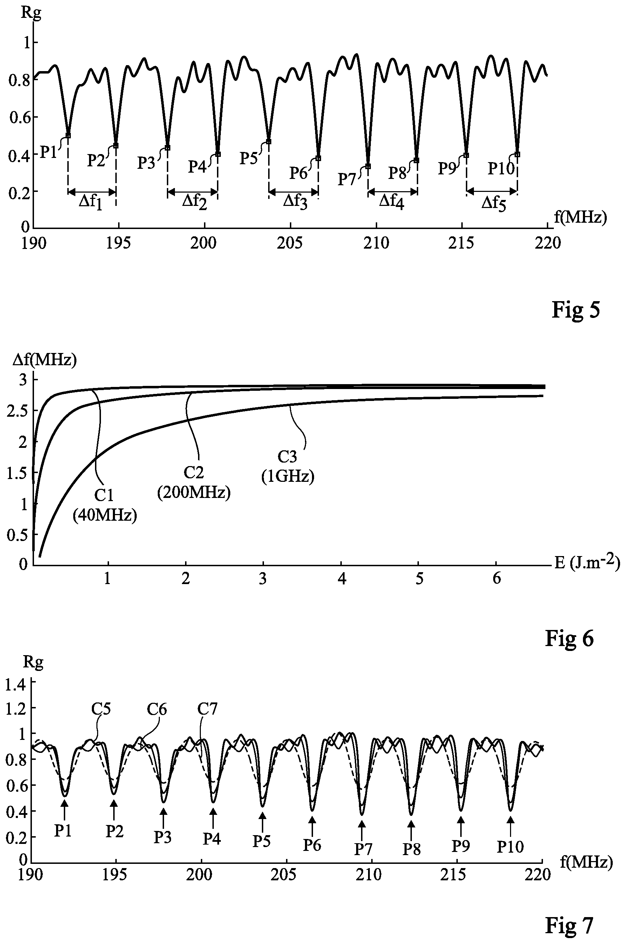

La figure 5 est un spectrogramme représentant l'évolution, en fonction de la fréquence f (en abscisse en MHz), du coefficient de réflexion global $R_g$ (en ordonnée) tel que défini ci-dessus, calculé par le circuit de traitement 303 à partir du signal retour mesuré par le transducteur 301.

Comme cela apparaît sur la figure 5, le coefficient de réflexion global $R_g$ présente une succession de minimas locaux ou pics de résonance P1, P2, P3, P4, P5, P6, P7, P8, P9, P10, régulièrement répartis sur la plage fréquentielle de mesure (allant de 190 à 220 MHz dans l'exemple représenté et correspondant à la bande passante en réception du transducteur ultrasonore 301).

Des études conduites par les inventeurs ont montré que ces pics de résonance correspondent à des résonances en modes de Lamb de l'assemblage formé par les substrats W1 et W2. Plus particulièrement, un pic sur deux de la suite de pics (les pics de rang pair dans cet exemple) correspond à une résonance en mode de Lamb symétrique (c'est à dire correspondant à un mode de vibration symétrique par rapport au plan d'interface entre les substrats W1 et W2), les autres pics (les pics de rang impair dans cet exemple) correspondant à des résonances en modes de Lamb antisymétriques (c'est à dire correspondant à des modes de vibrations antisymétriques par rapport au plan d'interface entre les substrats W1 et W2).

Les inventeurs ont constaté que la position fréquentielle des pics de résonance symétrique (les pics de rangs pairs dans cet exemple) varie significativement en fonction de la qualité du collage entre les substrats W1 et W2, et plus particulièrement en fonction de l'énergie d'adhérence entre les substrats W1 et W2. La position des pics de résonance antisymétrique (les pics de rangs impairs dans cet exemple) est en revanche indépendante de la qualité du collage entre les substrats.

Les inventeurs expliquent ce comportement par le fait que les résonances en modes de Lamb symétriques n'induisent pas de déplacement significatif du milieu de l'assemblage entre les deux substrats, mais génèrent, au niveau du milieu de l'assemblage (à l'interface entre les deux substrats dans l'exemple représenté), des contraintes en contraction/dilatation selon une direction orthogonale au plan de l'interface. L'interface est donc relativement fortement sollicitée par les résonances en modes de Lamb symétriques, d'où il résulte que la qualité du collage influe sur la fréquence des résonances en modes de Lamb symétriques. Au contraire, les résonances en modes de Lamb antisymétriques provoquent un déplacement de l'ensemble de la structure, mais ne génèrent pas de contrainte de compression/dilatation significatives au niveau de l'interface. La qualité du collage n'influe donc pas ou peu sur la fréquence des résonances en modes de Lamb antisymétriques.

Ainsi, l'écart fréquentiel entre deux pics consécutifs du signal $R_g$ est représentatif de la qualité du collage entre les substrats W1 et W2.

Le procédé de contrôle mis en oeuvre par le dispositif 300 comprend la détection, par le circuit de traitement 303, d'au moins deux minimas locaux consécutifs du signal $R_g$, correspondant à deux résonances consécutives symétrique et antisymétrique ou antisymétrique et symétrique du signal $R_g$, par exemple des résonances en modes de Lamb, et la mesure de l'écart fréquentiel entre ces deux pics.

Les inventeurs ont plus particulièrement constaté que la fréquence des pics de résonance symétrique (les pics de rang pair dans l'exemple représenté) diminue lorsque la qualité du collage se dégrade. Ainsi, l'écart fréquentiel Δf entre un pic de résonance antisymétrique et le pic de résonance symétrique de rang immédiatement supérieur est d'autant plus faible que la qualité du collage est faible, et inversement. L'évaluation de la qualité de l'interface entre les substrats W1 et W2 peut donc être basée sur la mesure de l'écart fréquentiel entre les pics de résonance antisymétrique et les pics de résonance symétrique.

En théorie, l'écart fréquentiel entre chaque pic de résonance antisymétrique et le pic de résonance symétrique de rang immédiatement supérieur est sensiblement constant sur toute la plage de fréquence mesurée. Une seule mesure d'écart fréquentiel Δf entre un pic de résonance antisymétrique et le pic de résonance symétrique de rang immédiatement supérieur permet donc d'obtenir une information quant à la qualité du collage entre les substrats.

Toutefois, dans un mode de réalisation préféré, pour augmenter le rapport signal sur bruit de la mesure et améliorer la précision du contrôle, on prévoit de mesurer, pour chacun des pics de résonance antisymétrique (les pics de rang impair dans cet exemple) de la plage fréquentielle de mesure, l'écart fréquentiel entre le pic de résonance antisymétrique et le pic de résonance symétrique de rang immédiatement supérieur, puis de calculer la moyenne des écarts fréquentiels mesurés. Dans l'exemple de la figure 5, cinq écarts fréquentiels $\Delta f_1$, $\Delta f_2$, $\Delta f_3$, $\Delta f_4$, $\Delta f_5$ sont mesurés à partir des positions des dix pics P1, P2, P3, P4, P5, P6, P7, P8, P9, P10 du signal, avec $\Delta f_1 = f(P2) - f(P1)$, $\Delta f_2 = f(P4) - f(P3)$, $\Delta f_3 = f(P6) - f(P5)$, $\Delta f_4 = f(P8) - f(P7)$, et $\Delta f_5 = f(P10) - f(P9)$. L'écart fréquentiel Δf utilisé pour évaluer la qualité de l'interface entre les substrats W1 et W2 correspond à la moyenne des valeurs $\Delta f_1$, $\Delta f_2$, $\Delta f_3$, $\Delta f_4$, $\Delta f_5$.

Bien entendu, les modes de réalisation décrits ne se limitent pas à l'exemple représenté dans lequel la plage fréquentielle de mesure du signal $R_g$ inclut dix pics de résonance. Les modes de réalisation décrits s'appliquent plus généralement quelle que soit l'étendue de la plage fréquentielle de mesure du signal $R_g$, pour autant que celle-ci comprenne au moins deux et de préférence au moins quatre pics correspondant à des résonances, par exemple en modes de Lamb, de l'assemblage formé par les substrats W1 et W2.

La détection des pics de résonance par le circuit de contrôle et de traitement 303 peut être mise en oeuvre par toute méthode de détection de minimas locaux connue. De telles méthodes sont à la portée de l'homme du métier et ne seront pas détaillées ici. La détection des pics de résonance peut notamment comporter un seuillage pour filtrer d'éventuels pics parasites.

En pratique, pour déterminer si les pics de résonance antisymétrique sont les pics de rang impair ou les pics de rang pair, on peut considérer trois pics consécutifs Pi, Pi+1, Pi+2 de la suite de pics détectés, par exemple les trois premiers pics de la suite, et calculer les écarts fréquentiels entre les pics Pi et Pi+1 d'une part, et entre les pics Pi+1 et Pi+2 d'autre part. Si l'écart entre les pics Pi et Pi+1 est inférieur à l'écart entre les pics Pi+1 et Pi+2, cela signifie que les pics Pi, Pi+2, etc., sont des pics de résonance antisymétrique et que les pics Pi+1, Pi+3, etc., sont des pics de résonance symétrique. Dans le cas contraire, les pics Pi, Pi+2, etc., sont des pics de résonance symétrique et les pics Pi+1, Pi+3, etc., sont des pics de résonance antisymétrique.

La figure 6 est un diagramme représentant l'évolution constatée par les inventeurs de l'écart fréquentiel $\Delta f$ (en MHz, en ordonnée) mesuré entre les pics de résonance antisymétrique et symétrique du signal spectral $R_g(f)$, en fonction de l'énergie d'adhérence E (en J.m$^{-2}$, en abscisse) entre les deux substrats.

La figure 6 comprend plus particulièrement une courbe C2 correspondant au cas considéré ci-dessus d'une excitation ultrasonore réalisée à une fréquence de l'ordre de 200 MHz. La figure 6 comprend en outre une courbe C1 correspondant à une excitation ultrasonore à une fréquence de l'ordre de 40 MHz, et une courbe C3 correspondant à une excitation ultrasonore à une fréquence de l'ordre de 1 GHz.

Comme cela apparaît sur la figure 6, les courbes C1, C2 et C3 sont des courbes croissantes monotones, c'est à dire que plus l'énergie d'adhérence E entre les deux substrats est élevée, plus l'écart fréquentiel $\Delta f$ mesuré entre un pic de résonance antisymétrique et le pic de résonance symétrique de rang immédiatement supérieur du signal spectral $R_g$ est élevé, et inversement.

Pour une fréquence d'excitation ultrasonore donnée, la loi de variation h telle que E=h($\Delta f$) peut être déterminée lors d'une phase de calibration préalable (non détaillée) du dispositif de contrôle. Lors de cette phase de calibration, on peut par exemple prévoir de mesurer la valeur $\Delta f$ pour une série d'assemblages de référence présentant des énergies d'adhérence distinctes et connues. La loi h peut alors être mémorisée par le circuit de contrôle et de traitement 303, par exemple sous la forme d'une table de correspondance ou sous la forme d'une loi analytique.

Le procédé de contrôle mis en oeuvre par le dispositif 300 peut comporter une étape de détermination, par le circuit de traitement 303, à partir de la valeur $\Delta f$ mesurée sur le signal $R_g$ et en appliquant la loi h, d'une valeur représentative de l'énergie d'adhérence entre les deux substrats W1 et W2.

Comme cela apparaît sur la figure 6, les courbes C1, C2, C3 convergent toutes vers une même valeur plateau lorsque l'énergie d'adhérence entre les substrats augmente. Ce plateau est toutefois atteint d'autant plus tardivement que la fréquence du signal ultrasonore d'excitation est élevée. Ainsi, la plage de sensibilité du procédé de contrôle décrit est d'autant plus grande que la fréquence d'excitation ultrasonore utilisée est élevée. Une fréquence d'excitation comprise entre 100 MHz et 1GHz représente un compromis intéressant pour la plupart des applications en microélectronique ou en optoélectronique.

Bien que l'on ait décrit un exemple de mise en oeuvre dans lequel l'évaluation de la qualité du collage est basée sur une mesure de l'écart fréquentiel $\Delta f$ entre chaque pic de résonance antisymétrique (de rang impair dans l'exemple représenté) et le pic de résonance symétrique (de rang pair dans cet exemple) de rang immédiatement supérieur du signal spectral $R_g$, une méthode similaire basée sur une mesure d'un écart fréquentiel $\Delta f$ entre chaque pic de résonance symétrique (de rang pair dans cet exemple) et le pic de résonance antisymétrique (de rang impair dans cet exemple) de rang immédiatement supérieur du signal spectral $R_g$, peut être mise en oeuvre. Dans ce cas, l'écart $\Delta f$ augmente lorsque la qualité du collage se dégrade, et inversement. La loi h telle que E=h($\Delta f$) sera adaptée en conséquence.

Dans l'exemple décrit ci-dessus en relation avec les figures 3, 4, 5 et 6, le signal retour mesuré par le transducteur pendant la plage temporelle T2, pris en compte pour calculer le coefficient de réflexion global $R_g$ de l'assemblage, comprend trois échos de fond successifs $E_{F1}$, $E_{F2}$, $E_{F3}$, renvoyés par la face arrière de l'assemblage. Les modes de réalisation décrits ne se limitent toutefois pas à ce cas particulier. Plus généralement, les modes de réalisation décrits peuvent être mis en oeuvre dès lors que la plage temporelle T2 considérée pour le calcul du coefficient de réflexion $R_g$ englobe au moins un écho de fond de l'assemblage, c'est à dire un écho renvoyé par la face arrière B2 du substrat W2.

La figure 7 est un spectrogramme similaire à celui de la figure 5, illustrant la variation de la réponse du dispositif de la figure 3 en fonction du nombre d'échos de fonds successifs considérés pour le calcul du coefficient de réflexion global $R_g$. La figure 7 comprend une courbe C5 identique ou similaire à la courbe représentée en figure 5, correspondant au signal $R_g$ obtenu lorsque la plage temporelle T2 considérée pour le calcul du signal $R_g$ comprend les trois échos de fond successifs $E_{F1}$, $E_{F2}$, $E_{F3}$ réfléchis par la face arrière de l'assemblage. La figure 7 comprend en outre une courbe C6 représentant le signal $R_g$ obtenu lorsque la plage temporelle T2 considérée comprend les échos de fond $E_{F1}$, $E_{F2}$ mais ne comprend pas l'écho $E_{F3}$. La figure 7 comprend de plus une courbe C7 représentant le signal $R_g$ obtenu lorsque la plage temporelle T2 considérée comprend l'écho de fond $E_{F1}$, mais ne comprend pas les échos de fond $E_{F2}$ et $E_{F3}$.

Comme l'illustre la figure 7, la position fréquentielle des pics est indépendante du nombre d'échos de fond considérés pour le calcul du coefficient de réflexion global. Toutefois, les pics sont d'autant plus marqués, et donc détectables avec d'autant plus de précision, que le nombre d'échos de fond considéré est élevé. Ainsi, dans un mode de réalisation préféré, la plage temporelle T2 considérée pour le calcul du coefficient de réflexion global comprend au moins les deux premiers échos de fond du signal d'excitation, renvoyés par la face arrière de l'assemblage, et de préférence les trois premiers échos de fond du signal d'excitation. En pratique, au-delà du troisième écho de fond, le gain en précision apporté par la prise en compte des échos de fond suivants est relativement faible car ces échos de fond suivants sont très atténués. Ainsi, dans un mode de réalisation préféré, la plage T2 ne comprend pas plus que les trois premiers échos de fond du signal d'excitation.

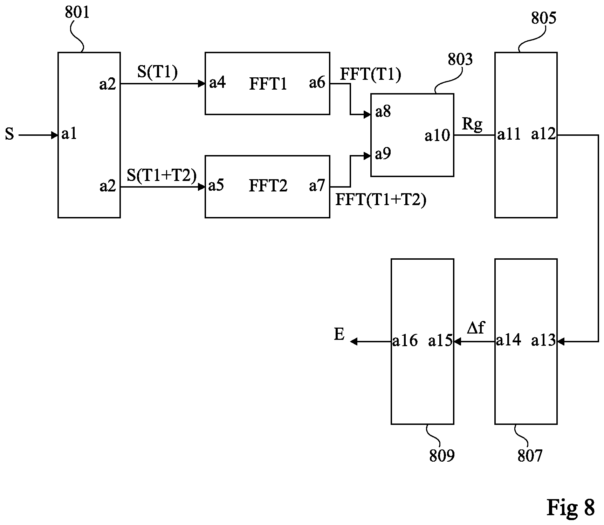

La figure 8 est un schéma bloc d'un exemple d'implémentation du circuit de traitement 303 du dispositif de contrôle 300 de la figure 3.

Dans cet exemple, le circuit 303 comprend un étage de filtrage temporel 801. L'étage 801 comprend une entrée a1 recevant l'intégralité du signal retour S mesuré par le transducteur ultrasonore 301, notamment pendant les plages T1 et T2, suite à l'émission d'un signal d'excitation par le transducteur, et deux sorties a2 et a3 fournissant respectivement le signal retour S(T1) mesuré par le transducteur pendant la plage temporelle T1, et le signal retour S(T1+T2) mesuré par le transducteur pendant la plage temporelle T1+T2.

Le circuit 303 de la figure 8 comprend en outre deux étages FFT1 et FFT2 de calcul de transposées fréquentielles. L'étage FFT1 présente une entrée a4 reliée à la sortie a2 de l'étage 801, et l'étage FFT2 présente une entrée a5 reliée à la sortie a3 de l'étage 801. Chacun des étages FFT1 et FFT2 est adapté à calculer une transposée dans le domaine fréquentiel, par exemple une transformée de Fourier rapide, du signal temporel appliqué sur son entrée. L'étage FFT1 comprend une sortie a6 fournissant la transposée FFT(T1) du signal S(T1), et une sortie a7 fournissant la transposée FFT(T1+T2) du signal S(T1+T2).

Le circuit 303 de la figure 8 comprend en outre un étage 803 comprenant deux entrées a8 et a9 reliées respectivement à la sortie a6 de l'étage FFT1 et à la sortie a7 de l'étage FFT2. L'étage 803 est adapté à générer le signal spectral $R_g$ représentatif de l'évolution fréquentielle du coefficient de réflexion global de l'assemblage. Pour générer le signal $R_g$, l'étage 803 peut par exemple diviser le signal de sortie FFT(T1+T2) de l'étage FFT2 par le signal de sortie FFT(T1) de l'étage FFT1. L'étage 803 comprend une sortie a10 de fourniture du signal $R_g$.

Le circuit 303 de la figure 8 comprend en outre un étage 805 de détection de pics de résonance dont une entrée a11 est reliée à la sortie a10 de l'étage 803. L'étage 805 est adapté à analyser le signal $R_g$ fourni par l'étage 803 et à détecter les pics de résonance caractéristiques de ce signal (les pics P1, P2, P3, P4, P5, P6, P6, P8, P9, P10 dans l'exemple de la figure 5). L'étage 805 comprend une sortie a12 fournissant les coordonnées en fréquence des pics détectés.

Le circuit 303 de la figure 8 comprend de plus un étage 807 adapté à mesurer l'écart fréquentiel Δf entre des pics de résonance consécutifs détectés par l'étage 805. L'étage 807 comprend une entrée a13 reliée à la sortie a12 de l'étage 805, et une sortie a14 fournissant la valeur Δf mesurée et éventuellement moyennée.

Le circuit 303 de la figure 8 comprend de plus un étage 809 adapté à déterminer une valeur E représentative de l'énergie d'adhérence entre les deux substrats de l'assemblage contrôlés, à partir de la valeur d'écart fréquentiel Δf fournie par l'étage 807. L'étage 809 comprend une entrée a15 reliée à la sortie a14 de l'étage 807, et une sortie a16 fournissant la valeur E.

Un avantage des modes de réalisation décrits en relation avec les figures 3 à 8 est qu'ils permettent de réaliser un contrôle non destructif de la qualité d'un collage entre deux substrats, et ce y compris dans le cas où les deux substrats sont de même nature et présentent des rugosités de surface de très petites dimensions à l'interface entre les deux substrats.

Les modes de réalisation décrits peuvent toutefois aussi être utilisés pour contrôler des assemblages dans lesquels les deux substrats sont en des matériaux différents, et/ou présentent des rugosités plus importantes à l'interface entre les deux substrats. En effet, le procédé décrit ci-dessus reste applicable dans le cas où le signal retour mesuré par le transducteur dans la plage T2 comprend, en plus des échos de fond représentés en figure 3, un ou plusieurs échos d'interface.

Par ailleurs, on a décrit ci-dessus un exemple de procédé de contrôle de la qualité d'un collage entre deux substrats, ce procédé comprenant une unique phase d'émission d'un signal d'excitation ultrasonore par le transducteur du dispositif de contrôle, suivie d'une phase de réception d'un signal ultrasonore retour par le transducteur, puis d'une phase d'analyse de ce signal retour. A titre de variante, les phases d'émission-réception susmentionnées peuvent être réitérées une pluralité de fois, par exemple 200 à 600 fois à une fréquence de tir (nombre d'émissions par seconde du signal d'excitation) de l'ordre de 1 kHz, de façon à augmenter le rapport signal sur bruit de la mesure. Dans ce cas, le signal analysé par le dispositif de traitement est par exemple une moyenne des signaux retour mesurés par le transducteur lors des phases d'émission-réception successives.

Par ailleurs, le procédé de contrôle décrit ci-dessus peut être réitéré une pluralité de fois, en déplaçant le transducteur ultrasonore parallèlement au plan moyen de l'assemblage des substrats entre deux itérations successives, de façon à obtenir une image ou cartographie de l'énergie d'adhérence locale entre les deux substrats. La résolution de cette image dépendra notamment de la surface de la portion d'assemblage excitée par le transducteur ultrasonore à chaque itération du procédé, et du déplacement du transducteur relativement à l'assemblage entre deux itérations successives du procédé.

Des modes de réalisation particuliers ont été décrits. Diverses variantes et modifications apparaîtront à l'homme de l'art. En particulier, les modes de réalisation décrits ne se limitent pas aux diverses valeurs numériques mentionnées à titre d'exemple illustratif dans la présente description.

## Revendications

1. Procédé de contrôle d'un assemblage comprenant des premier (W1) et deuxième (W2) substrats ayant chacun une face avant (A1, A2) et une face arrière (B1, B2), la face arrière (B1) du premier substrat (W1) étant collée à la face avant (A2) du deuxième substrat (W2), ce procédé comportant les étapes suivantes :

> a) émettre un signal ultrasonore d'excitation en direction de l'assemblage au moyen d'un transducteur ultrasonore (301) placé du côté de la face avant (A1) du premier substrat (W1) ;
> b) mesurer, au moyen dudit transducteur (301), un signal ultrasonore retour comportant au moins un écho ($E_{F1}$) du signal d'excitation sur la face arrière (B2) du deuxième substrat (W2) ;
> c) calculer, au moyen d'un circuit de traitement (303), un signal spectral ($R_g$) représentatif de l'évolution en fréquence d'un coefficient de réflexion global de l'assemblage, défini comme étant le rapport du signal retour mesuré à l'étape b) sur le signal d'excitation ; et
> d) déduire dudit signal spectral ($R_g$), au moyen du circuit de traitement (303), une information quant à la qualité du collage entre les premier (W1) et deuxième (W2) substrats.

2. Procédé selon la revendication 1, dans lequel l'étape d) comprend les étapes suivantes :

> détecter une suite de pics successifs du signal spectral ($R_g$), correspondant à des résonances de l'assemblage comprenant les premier (W1) et deuxième (W2) substrats ; et
> déterminer l'écart fréquentiel moyen $\Delta f$ entre deux pics consécutifs de rangs respectivement impair et pair ou de rangs respectivement pair et impair de la suite.

3. Procédé selon la revendication 2, dans lequel l'étape d) comprend la détermination, à partir de l'écart fréquentiel moyen $\Delta f$ déterminé, d'une valeur représentative de l'énergie d'adhérence entre les premier (W1) et deuxième (W2) substrats.

4. Procédé selon la revendication 2 ou 3, dans lequel ladite suite de pics comprend au moins 4 pics.

5. Procédé selon l'une quelconque des revendications 1 à 4, dans lequel ledit signal retour comporte au moins deux échos successifs ($E_{F1}$, $E_{F2}$, $E_{F3}$) du signal d'excitation sur la face arrière (B2) du deuxième substrat (W2).

6. Procédé selon la revendication 5, dans lequel ledit signal retour comporte trois échos successifs ($E_{F1}$, $E_{F2}$, $E_{F3}$) du signal d'excitation sur la face arrière (B2) du deuxième substrat (W2) .

7. Procédé selon l'une quelconque des revendications 1 à 6, dans lequel :

> à l'étape b), ledit signal retour est mesuré pendant deux plages temporelles consécutives T1 et T2, la plage T1 comprenant uniquement un écho de surface ($E_S$) du signal d'excitation renvoyé directement par la face avant (A1) du premier substrat (W1), et la plage T2 comprenant ledit au moins un écho ($E_{F1}$) du signal d'excitation sur la face arrière (B2) du deuxième substrat (W2) ; et
> à l'étape c), le signal spectral ($R_g$) calculé correspond au rapport d'une transposée fréquentielle du signal retour mesuré pendant la plage T1+T2 sur une transposée fréquentielle du signal retour mesuré pendant la plage T1.

8. Procédé selon l'une quelconque des revendications 1 à 7, dans lequel le signal ultrasonore d'excitation a une fréquence comprise entre 100 MHz et 1 GHz.

9. Procédé selon l'une quelconque des revendications 1 à 8, dans lequel la durée du signal ultrasonore d'excitation est inférieure à 1 $\mu$s.

10. Procédé selon l'une quelconque des revendications 1 à 9, dans lequel les étapes a) à d) sont réitérées une pluralité de fois en déplaçant le transducteur ultrasonore (301) parallèlement au plan moyen de l'assemblage entre deux itérations successives, de façon à obtenir une image ou cartographie de la qualité du collage entre les deux substrats.

11. Procédé selon l'une quelconque des revendications 1 à 10, dans lequel, à l'étape a), le signal ultrasonore d'excitation est émis sous incidence normale par rapport à la face avant (A1) du premier substrat (W1).

12. Dispositif de contrôle d'un assemblage comprenant des premier (W1) et deuxième (W2) substrats ayant chacun une face avant (A1, A2) et une face arrière (B1, B2), la face arrière (B1) du premier substrat (W1) étant collée à la face avant (A2) du deuxième substrat (W2), ce dispositif comportant un transducteur ultrasonore (301) et un dispositif de traitement (303) configurés pour mettre en oeuvre un procédé de contrôle selon l'une quelconque des revendications 1 à 11.

**Patentansprüche**

1. Verfahren zum Steuern einer Anordnung aus einem ersten (W1) und einem zweiten (W2) Substrat, die jeweils eine vordere Oberfläche (A1, A2) und eine hintere Oberfläche (B1, B2) aufweisen, wobei die hintere Oberfläche (B1) des ersten Substrats (W1) mit der vorderen Oberfläche (A2) des zweiten Substrats (W2) verbunden bzw. verklebt ist, wobei das Verfahren die folgenden Schritte aufweist:

   a) Übertragen eines Anregungs-Ultraschallsignals in Richtung der Anordnung mittels eines Ultraschallwandlers (301), der auf der Seite der vorderen Oberfläche (A1) des ersten Substrats (W1) angeordnet ist;
   b) Messen eines Ultraschallrückkehrsignals, das mindestens ein Echo ($E_{F1}$) des Anregungssignals aufweist, und zwar auf der hinteren Oberfläche (B2) des zweiten Substrats (W2) mit Hilfe des genannten Wandlers (301);
   c) Berechnen, mittels einer Verarbeitungsschaltung (303), eines Spektralsignals ($R_g$), das für die Frequenzvariation eines Gesamt-Reflexionskoeffizienten der Anordnung repräsentativ ist, der als das Verhältnis des in Schritt b) gemessenen Rückkehrsignals zu dem Anregungssignal definiert ist; und
   d) Ableiten von Informationen über die Qualität der Verbindung bzw. Verklebung zwischen dem ersten (W1) und dem zweiten (W2) Substrat, und zwar aus dem Spektralsignal ($R_g$) mit Hilfe der Verarbeitungsschaltung (303).

2. Verfahren nach Anspruch 1, wobei der Schritt d) die folgenden Schritte aufweist:

   Erfassen einer Reihe von aufeinanderfolgenden Spitzen des Spektralsignals ($R_g$), die Resonanzen der Anordnung, die das erste (W1) und das zweite (W2) Substrat aufweist, entsprechen; und
   Bestimmen des durchschnittlichen Häufigkeitsintervalls Δf zwischen zwei aufeinanderfolgenden Spitzen von jeweils ungeraden und geraden Ordnungszahlen oder von jeweils geraden und ungeraden Ordnungszahlen in der Reihe.

3. Verfahren nach Anspruch 2, wobei der Schritt d) das Bestimmen eines für die Bindungsenergie zwischen dem ersten (W1) und dem zweiten (W2) Substrat repräsentativen Anhaftungswertes aus dem bestimmten durchschnittlichen Frequenzintervall Δf aufweist.

4. Verfahren nach Anspruch 2 oder 3, wobei die Reihe von Spitzen mindestens 4 Spitzen aufweist.

5. Verfahren nach einem der Ansprüche 1 bis 4, wobei das Rückkehrsignal mindestens zwei aufeinanderfolgende Echos ($E_{F1}$, $E_{F2}$, $E_{F3}$) des Anregungssignals auf der hinteren Oberfläche (B2) des zweiten Substrats (W2) aufweist.

6. Verfahren nach Anspruch 5, wobei das Rückkehrsignal drei aufeinanderfolgende Echos ($E_{F1}$, $E_{F2}$, $E_{F3}$) des Anregungssignals auf der hinteren Oberfläche (B2) des zweiten Substrats (W2) aufweist.

7. Verfahren nach einem der Ansprüche 1 bis 6, wobei:

   in Schritt b) das genannte Rückkehrsignal während zwei aufeinanderfolgender Zeitbereiche T1 und T2 gemessen wird, wobei der Bereich T1 nur ein Oberflächenecho ($E_s$) des Anregungssignals aufweist, das direkt von der vorderen Oberfläche (A1) des ersten Substrats (W1) reflektiert wird, und der Bereich T2 das genannte mindestens eine Echo ($E_{F1}$) des Anregungssignals auf der hinteren Oberfläche (B2) des zweiten Substrats (W2) aufweist; und
   in Schritt c) das berechnete Spektralsignal ($R_g$) mit dem Verhältnis einer Frequenzverschiebung des während des Bereichs T1+T2 gemessenen Rückkehrsignals zu einer Frequenzverschiebung des während des Bereichs T1 gemessenen Rückkehrsignals korreliert.

8. Verfahren nach einem der Ansprüche 1 bis 7, wobei das Anregungs-Ultraschallsignal eine Frequenz im Bereich von 100 MHz bis 1 GHz hat.

9. Verfahren nach einem der Ansprüche 1 bis 8, wobei die Dauer des Anregungs-Ultraschallsignals kürzer als 1 μs ist.

10. Verfahren nach einem der Ansprüche 1 bis 9, wobei die Schritte a) bis d) mehrmals wiederholt werden, wobei der Ultraschallwandler (301) parallel zur Mittelebene der Anordnung zwischen zwei aufeinanderfolgenden Iterationen verschoben wird, um ein Bild oder eine Abbildung der Qualität der Verbindung bzw. Verklebung zwischen den beiden Substraten zu erhalten.

11. Verfahren nach einem der Ansprüche 1 bis 10, wobei in Schritt a) das Anregungs-Ultraschallsignal unter einem senkrechten Einfall in Bezug auf die vordere Oberfläche (A1) des ersten Substrats (W1) abgestrahlt wird.

12. Vorrichtung zum Steuern einer Anordnung, die ein erstes (W1) und ein zweites (W2) Substrat aufweist, die jeweils eine vordere Oberfläche (A1, A2) und eine hintere Oberfläche (B1, B2) aufweisen, wobei die hintere Oberfläche (B1) des ersten Substrats (W1) mit der vorderen Oberfläche (A2) des zweiten Substrats (W2) verbunden bzw. verklebt ist, wobei die Vorrichtung einen Ultraschallwandler (301) und eine Verarbeitungsvorrichtung (303) aufweist, die so konfiguriert sind, dass sie das Steuerverfahren nach einem der Ansprüche 1 bis 11 implementieren.

**Claims**

1. A method of controlling an assembly comprising first (W1) and second (W2) substrates each having a front surface (A1, A2) and a rear surface (B1, B2), the rear surface (B1) of the first substrate (W1) being bonded to the front surface (A2) of the second substrate (W2), the method comprising the steps of:

    a) transmitting an excitation ultrasound signal towards the assembly by means of an ultrasound transducer (301) placed on the front surface side (A1) of the first substrate (W1);
    b) measuring, by means of said transducer (301), an ultrasound signal comprising at least one echo ($E_{F1}$) of the excitation signal on the rear surface (B2) of the second substrate (W2);
    c) calculating, by means of a processing circuit (303), a spectral signal ($R_g$) representative of the frequency variation of a general reflection coefficient of the assembly, defined as being the ratio of the return signal measured at step b) to the excitation signal; and
    d) deducing from said spectral signal ($R_g$), by means of the processing circuit (303), information relative to the quality of the bonding between the first (W1) and second (W2) substrates.

2. The method of claim 1, wherein step d) comprises the steps of:

    detecting a series of successive peaks of the spectral signal ($R_g$), corresponding to resonances of the assembly comprising the first (W1) and second (W2) substrates; and
    determining the average frequency interval $\Delta f$ between two consecutive peaks of respectively odd and even ranks or of respectively even and odd ranks in the series.

3. The method of claim 2, wherein step d) comprises determining, from the determined average frequency interval $\Delta f$, a value representative of the bonding energy between the first (W1) and second (W2) substrates.

4. The method of claim 2 or 3, wherein said series of peaks comprises at least 4 peaks.

5. The method of any of claims 1 to 4, wherein said return signal comprises at least two successive echoes ($E_{F1}$, $E_{F2}$, $E_{F3}$) of the excitation signal on the rear surface (B2) of the second substrate (W2).

6. The method of claim 5, wherein said return signal comprises three successive echoes ($E_{F1}$, $E_{F2}$, $E_{F3}$) of the excitation signal on the rear surface (B2) of the second substrate (W2) .

7. The method of any of claims 1 to 6, wherein:

    at step b), said return signal is measured during two consecutive time ranges T1 and T2, range T1 only comprising a surface echo ($E_S$) of the excitation signal directly reflected by the front surface (A1) of the first substrate (W1), and range T2 comprising said at least one echo ($E_{F1}$) of the excitation signal on the rear surface (B2) of the second substrate (W2); and
    at step c), the calculated spectral signal ($R_g$) corresponds to the ratio of a frequency transpose of the return signal measured during range T1+T2 to a frequency transpose of the return signal measured during range T1.

8. The method of any of claims 1 to 7, wherein the excitation ultrasound signal has a frequency in the range from 100 MHz to 1 GHz.

9. The method of any of claims 1 to 8, wherein the duration of the excitation ultrasound signal is shorter than 1 $\mu$s.

10. The method of any of claims 1 to 9, wherein steps a) to d) are repeated a plurality of times by displacing the ultrasound transducer (301) parallel to the mean plane of the assembly between two successive iterations, to obtain an image or mapping of the quality of the bonding between the two substrates.

11. The method of any of claims 1 to 10, wherein, at step a), the excitation ultrasound signal is transmitted under a normal incidence with respect to the front surface (A1) of the first substrate (W1).

12. A device for controlling an assembly comprising first (W1) and second (W2) substrates each having a front surface (A1, A2) and a rear surface (B1, B2), the rear surface (B1) of the first substrate (W1) being bonded to the front surface (A2) of the second substrate (W2), the device comprising an ultrasound transducer (301) and a processing device (303) configured to implement the control method of any of claims 1 to 11.

Fig 1

Fig 2

Fig 3

Fig 4

Fig 5

Fig 6

Fig 7

Fig 8

**RÉFÉRENCES CITÉES DANS LA DESCRIPTION**

**Documents brevets cités dans la description**

- FR 1662258

**Littérature non-brevet citée dans la description**

- **ANTON I. LAVRENTYEV.** *Ultrasonic spectroscopy of imperfect contact interfaces between a layer and two solids*
- **A. BALTAZAR.** *On the relationship between ultrasonic and micro-structural properties of imperfect interfaces in layered solids*
- **A. BALTAZAR.** *On the relationship between ultrasonic and micromechanical properties of contacting rough surfaces*
- **M. OUAFTOUH.** *Évaluation de l'adhérence par ultrasons haute-fréquence*
- **BALTAZAR A ; WANG L ; XIE B ; ROKHLIN SI.** Inverse ultrasonic détermination of imperfect interfaces and bulk properties of a layer between two solids. *J. Acoust. Soc. Am.,* Septembre 2003, vol. 114 (3), 1424-34